# EUROPEAN PATENT SPECIFICATION

(11) **EP 3 620 387 B1**
(45) Date of publication and mention of the grant of the patent: **23.03.2022**
(21) Application number: 19196269.5
(22) Date of filing: 09.09.2019
(51) Int. Cl.: B64D 27/20

(54) **PREDICTION OF INLET DISTORTION OF BOUNDARY LAYER INGESTING PROPULSION SYSTEM**
VORHERSAGE VON EINLASSVERZERRUNG EINES GRENZSCHICHTAUFNAHMEANTRIEBSSYSTEMS
PRÉDICTION DE LA DISTORSION D'ENTRÉE DE SYSTÈME DE PROPULSION D'INGESTION DE COUCHE LIMITE

(30) Priority: 07.09.2018 US 201816124506
(43) Date of publication of application: 11.03.2020
(73) Proprietor: Raytheon Technologies Corporation, Farmington, CT 06032 (US)
(72) Inventor: MURPHY, Michael Joseph, Windsor, CT 06095 (US)
(74) Representative: Dehns

(56) References cited:
- EP-A1- 3 144 226
- EP-A2- 2 034 159
- US-A1- 2016 122 005
- US-A1- 2018 149 084

## Description

### BACKGROUND

Conventional aircraft architecture includes wing mounted gas turbine engines. Alternate aircraft architectures mount the gas turbine engines atop the fuselage or on opposite sides of the aircraft fuselage adjacent to a surface. Accordingly, a portion of an engine fan may ingest portions of a boundary layer of airflow while other portions of the fan spaced apart from the aircraft surface may not encounter boundary layer flow. Differences in airflow characteristics across different parts of the fan can 0impact fan efficiency.

A gas turbine engine assembly having the features of the preamble of claim 1, and a method having the features of the preamble of claim 12 is disclosed in EP 2 034 159 A2. US 2016/122005 A1 is a prior art embedded engine in a hybrid blended wing body and EP 3 144 226 A1 is a prior art aft engine for an aircraft.

### SUMMARY

According to a first aspect, there is provided a gas turbine engine assembly as set forth in claim 1.

According to a further aspect, there is provided a method as set forth in claim 12.

Embodiments of the disclosure are set forth in the dependent claims.

In a further embodiment of any of the foregoing gas turbine engine assemblies, the fan nacelle includes a top surface spaced apart from the forward surface in a direction transverse to the fan rotation axis and a second sensor is disposed on the top surface.

In a further embodiment of any of the foregoing gas turbine engine assemblies, the at least one sensor includes a plurality of sensors spaced apart forward of the inlet.

In a further embodiment of any of the foregoing gas turbine engine assemblies, the plurality of sensors are spaced axially apart from each other forward of the inlet.

In a further embodiment of any of the foregoing gas turbine engine assemblies, the at least one sensor comprises a pressure probe.

In a further embodiment of any of the foregoing gas turbine engine assemblies, the effector comprises mechanism that changes an incident angle of each of the plurality of fan blades based on a circumferential position.

According to a further aspect, there is provided a gas turbine engine assembly as set forth in claim 10.

In a embodiment of the foregoing gas turbine engine assembly, the signal indicative of an airflow condition comprises a non-uniform airflow condition about the inlet.

In another embodiment of any of the foregoing gas turbine engine assemblies, a portion of the fan nacelle is disposed adjacent a forward surface that is forward of the inlet and the at least one means for generating a signal is disposed on the forward surface forward of the inlet.

According to a further aspect, there is provided a method as set forth in claim 12.

In an embodiment of the foregoing method of operating a gas turbine engine mounted within an aircraft fuselage, the fan nacelle is integrated into an aircraft fuselage and partially surrounds a plurality of fan blades rotatable about a fan axis and the surface forward of the fan inlet is a portion of the aircraft fuselage.

In a further embodiment of any of the foregoing methods of operating a gas turbine engine mounted within an aircraft fuselage, at least a portion of airflow into the fan inlet is a boundary layer along the forward surface of the aircraft fuselage and the inlet distortion varies in a direction away from the forward surface.

In a further embodiment of any of the foregoing methods of operating a gas turbine engine mounted within an aircraft fuselage, a plurality of pressures is identified that correspond with one of a plurality of inlet distortion conditions and determining the inlet distortion condition based on the pressure measured by the at least one sensor forward of the inlet.

In a further embodiment of any of the foregoing methods of operating a gas turbine engine mounted within an aircraft fuselage, the plurality of inlet distortion conditions comprise an airflow velocity profile that varies in a direction transverse to the fan axis.

In a further embodiment of any of the foregoing methods of operating a gas turbine engine mounted within an aircraft fuselage, the at least one sensor comprise a plurality of pressure sensors spaced axially forward of the fan inlet that measure a static pressure.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft.
Figure 2 is a schematic view of a portion of the example aircraft and an example propulsion system.
Figure 3 is a schematic representation of an incoming airflow velocities.
Figure 4 is a schematic view of the example propulsion system embodiment.
Figure 5 is a flow chart illustrating a process of defining operation of the example propulsion system.

### DETAILED DESCRIPTION

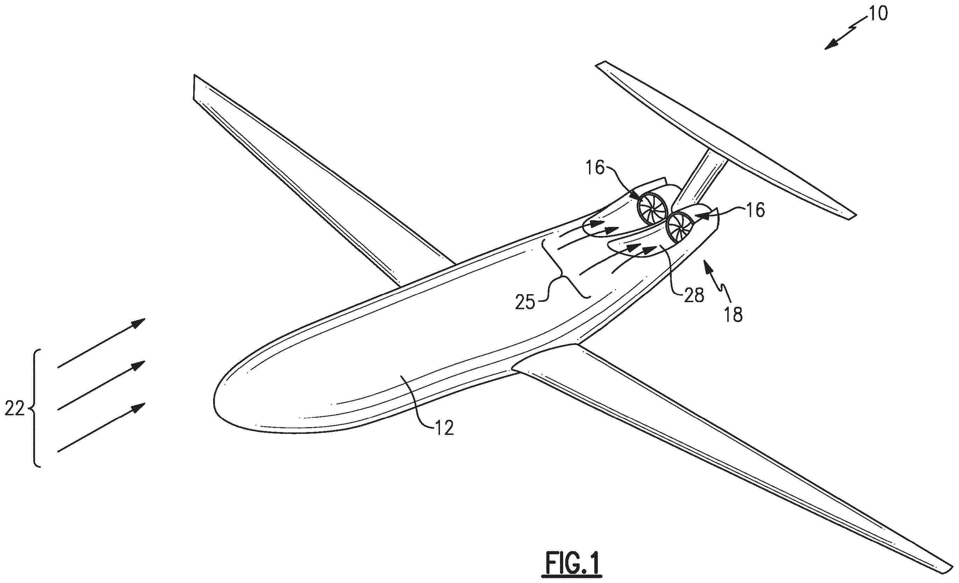

Referring to the Figure 1, an aircraft 10 includes a fuselage 12 and a propulsion system 18 mounted within an aft end of the fuselage 12. The example propulsion system 18 includes first and second gas turbine engines (not shown) that drive corresponding fan assemblies 16.

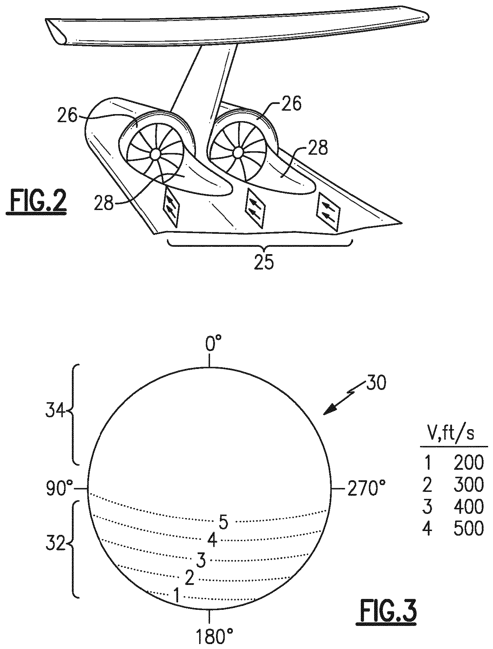

Referring to Figure 2 with continued reference to Figure 1, the propulsion system 18 ingests airflow through each fan assembly 16. Because the propulsion system 18 is mounted at the aft end of the fuselage 12, the fan assemblies 16 ingest boundary layer airflow schematically shown at 25. Each fan assembly 16 is partially surrounded by a nacelle 26. A portion of the fan assembly 16 not surrounded by the nacelle 26 is disposed aft of a surface 28 of the fuselage 12. Due to boundary layer development along fuselage 12 and surface 28, airflow 25 along and above surface 28 that enters the fan assemblies 16 is non-uniform. In this example, a velocity of the airflow 25 varies in a direction transverse to the fan rotational axis away from the surface 28. The uniform flow schematically shown at 22 that initially is encountered by the aircraft is changed by the proximity to the fuselage 12 and surface by boundary layer effects. The varying airflow velocity creates a non-uniform flow-field entering the fan assembly 16 that results in non-optimal incidence angles for at least some of the fan blades 20 during a portion of rotation. Conventional jet engine fans are designed to receive uniform flow for each circumferential position.

The pitch angle for each fan blade 20 is conventionally the same for fan assemblies 16 not subject to non-uniform airflow velocities. As appreciated, in a conventional nacelle mounted engine, the flow field is substantially uniform and therefore a single blade pitch angle for each fan blade can be utilized and optimized.

Referring to Figure 3, with continued reference to Figures 1 and 2, a representation of airflow velocities within different regions of the circumference of the disclosed example fan assembly 16 is indicated at 30. The example airflow velocities are shown as examples and other velocity profiles and values may be applicable depending on fuselage shape configuration and the generation of the boundary layer airflow. The represented airflow velocities 30 illustrate differences in airflow velocities relative to the different regions within the circumference of the fan 16.

The example fan assemblies 16 are mounted adjacent to surfaces 28 of the fuselage 12 and therefore encounter non-uniform airflow velocities that vary within a circumferential region of a fan inlet area. The airflow velocities vary in a way that corresponds with a distance from the surface 28 of the fuselage 12. The closer to the surface 28, the slower the airflow. The further away from the surface 28, the higher the airflow velocity. The non-uniform airflow velocities create different regions including a lower velocity region schematically shown at 32 and a higher velocity region 34. The differences in inlet airflow velocities result in differing output velocities of airflow and a varying inlet distortion condition.

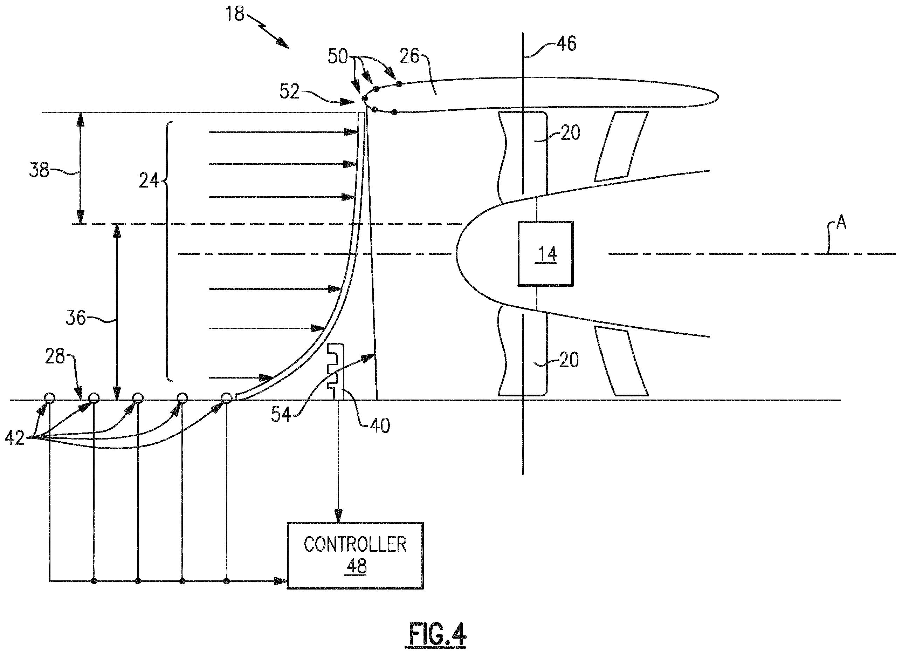

Referring to Figure 4, with continued reference to Figures 2 and 3, the example propulsion system 18 includes features that detect an airflow condition entering a fan inlet 54 and adjusts operation to accommodate the detected airflow condition. In this example, the airflow condition is the varying airflow velocity that is schematically indicated at 24. A controller 48 commands an effector 14 that adjusts engine features to accommodate the varying airflow velocities. In this example, the effector 14 is a mechanism that adjusts a pitch of each of the fan blades 20 based on a circumferential position to accommodate for the differing airflow velocity regions. It should be understood, that other effector 14 structures could be utilized to accommodate the differing airflow velocity regions including variable stators, variable nozzles, boundary layer removal devices along with other structures that compensate for the non-uniform airflow.

A plurality of sensors 42 are disposed on the surface 28 forward of a fan inlet 54 of fan nacelle 26 and are utilized to identify the inlet distortion condition to guide operation of the effector 14. In this example, the sensors 42 are pressure sensors that sense a static pressure at various points spaced axially forward of the fan inlet 54 and fan blades 20. The sensors 42 communicate the static pressure to the controller 48. The controller 48 uses information from the sensors 42 to determine the inlet airflow condition and adjusts the effector 14 accordingly.

Additional sensors 50 and 40 can be utilized instead, or in combination with the sensors 42. The sensor 40 senses a total pressure at a location forward of the inlet 54. The sensors 50 are mounted at a tip 52 of the nacelle 26 and provide information indicative of a static or total pressure at a location spaced apart from the surface 28 and the boundary layer airflow. The sensors, 40, 42 and 50 maybe of any known sensor configuration that provide information indicative of a pressure at the mounted location. The sensors 40, 42 and 50 are utilized to sense a pressure in order to determine an airflow condition at the inlet 54. It should be appreciated that although pressure sensors are disclosed by way of example, other sensing devices that can provide information usable to determine an airflow condition at the inlet could also be utilized and are within the contemplation of this disclosure.

In this example disclosed embodiment, the effector 14 adjusts a pitch of each of the fan blades 20 (about axis 46 traverse to axis A) during each rotation about the axis A. The pitch of each fan blades 20 is thereby changed during operation depending on the circumferential position that corresponds with the different airflow velocity regions 36, 38. The pitch of each blade 20 is therefore adjusted throughout each rotation about the axis A to provide the most efficient orientation for the given region 36, 38. It should be appreciated that although two regions are shown by way of example, multiple regions could be included to further optimize fan operation and are within the contemplation and scope of this disclosure.

In this disclosed example, the inlet distortion comprises the varying airflow velocity field generally indicated at 24 that changes in a direction radially away from the surface 28. In this example, the velocities decrease in a direction towards the surface 28. In other words, the boundary layer that is flowing along the surface 28 is much slower than the airflow spaced apart from the surface 28. The differing airflows create an inlet distortion condition that is compensated by adjustments to structures of the propulsion system 18 actuated by the example effector 14.

It is understood that airflow changes during aircraft operation depending on environmental and operational conditions. The example propulsion system 18 utilizes the sensors 40, 42, 50 to measure a parameter that is correlated to a predetermined inlet distortion condition recognized by the controller 48. Upon identification of the inlet distortion condition that corresponds with the measured parameter, the effector 14 is actuated to adjust operation accordingly.

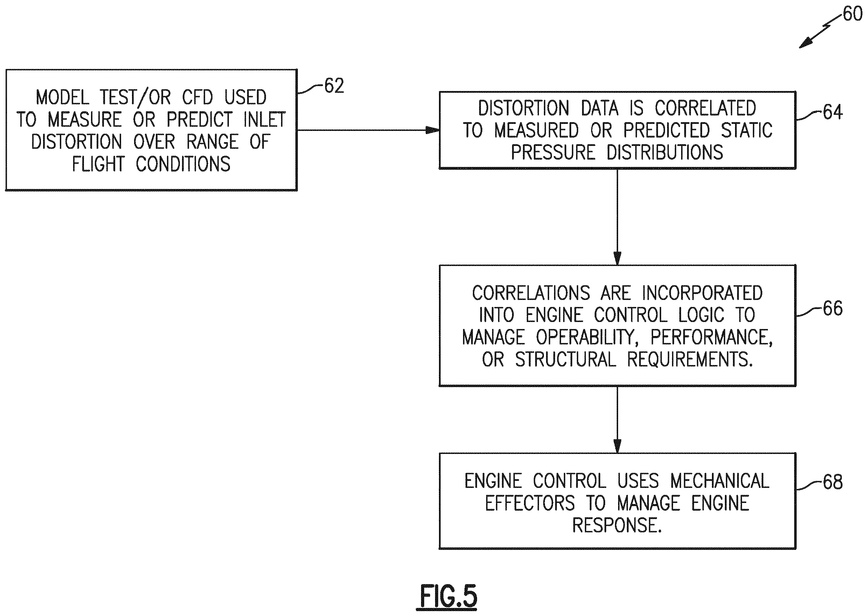

Referring to Figure 5, with continued reference to Figure 4, a method of determining operational parameters of a gas turbine engine is schematically indicated at 60. The example disclosed method identifies differing inlet distortion conditions and determines values of operating parameters that can be measured by the sensors 40, 42, 50 that correspond with each different inlet distortion condition. Accordingly, an initial step indicated at 62 is performed to provide information utilized by the controller 48 to command the effector 14. A plurality of differing inlet distortion conditions are tested and pressure readings at the location of the sensors 40, 42 and 50 are recorded.

The inlet distortion conditions can be replicated using a test model or through computational fluid dynamic analysis techniques. Moreover, other techniques could be utilized to generate information that correlates a measurable operating parameter with an inlet distortion condition. A correlation between the inlet distortion conditions and the measurable data is determined as is indicated at 64. In this disclosed example, each inlet distortion condition is correlated to a static pressure and/or total pressure measurable by the sensors 40, 42 and 50. The correlation information is provided to the controller 48 and utilized to manage operability, performance and adjustments to structural features of the propulsion system 18. For each identified inlet distortion condition, a correlated static and/or total pressure is also identified. An adjustment of the effector 14 that provides the most efficient operation for the identified inlet distortion condition is also identified and accessible by the controller 48 as is indicated at 66. The controller 48 can be a part of the aircraft 10 full authority digital control (FADEC) or other aircraft or propulsion system controller.

During operation, the controller 48, receives information from the sensors 40, 42 and 50 indicative of pressures at various locations near the inlet 54. The information regarding the various pressures is identified and matched to a corresponding predefined inlet distortion condition. In the disclosed example, the inlet distortion condition is a non-uniform airflow velocity as shown in Figure 4 that varies between the surface 28 and the nacelle tip 52. The specific distribution of airflow velocities may change during an operational cycle of the aircraft. Each different airflow velocity distribution will have a different and corresponding pressures that are measured by the sensors 40, 42, 50.

The controller 48 recognizes the different inlet distortion conditions by the constant information provided by the sensors 40, 42 and 50. The controller 48 correlates the measured pressure to a predefined inlet distortion condition and actuates the effector 14 to provide a predefined configuration that increases efficiency. In this example, the effector 14 changes the pitch of each fan blade 20 based on a circumferential position. The circumferential positon and pitch of each fan blade 20 is thereby adjusted based on the detected inlet distortion condition. Accordingly, the direct reading of pressures is used to identify an inlet distortion condition and the effector 14 tailors operation of the propulsion system in view of the identified inlet distortion condition.

Accordingly, the example system provides a method and means of accommodating non-uniform inlet distortions created by boundary layer ingestion for propulsors that are disposed within an aircraft fuselage.

Although an example embodiment has been disclosed, a worker of ordinary skill in this art would recognize that this disclosure is not just a material specification and that certain modifications would come within the scope of this disclosure. For that reason, the following claims should be studied to determine the scope and content of this disclosure.

## Claims

1. A gas turbine engine assembly (16) comprising;
a plurality of fan blades (20) rotatable about a fan rotation axis (A);
a fan nacelle (26) at least partially surrounding the plurality of fan blades (20), the fan nacelle (26) defining an inlet (54);
at least one means (42,40) of generating a signal indicative of an airflow condition entering the inlet (54);
an effector (14) that is actuatable to accommodate distortions in inlet airflow; and
a controller (48) receiving the signal indicative of an airflow condition entering the inlet (54) and determining an inlet distortion condition corresponding to the signal indicative of an airflow condition and actuating the effector (14) based on the identified inlet distortion condition, **characterised in that**:
the effector (14) comprises a pitch control mechanism that changes a pitch of each of the fan blades (20) to accommodate the determined inlet distortion condition.

2. The gas turbine engine as recited in claim 1, wherein the at least one means (42,40) of generating a signal indicative of an airflow condition entering the inlet (54) is at least one sensor (42,40) positioned forward of the fan nacelle (26).

3. The gas turbine engine assembly (16) as recited in claim 2, wherein the airflow condition comprises a non-uniform airflow condition.

4. The gas turbine engine assembly (16) as recited in claim 2 or 3, wherein a portion of the fan nacelle (26) is disposed adjacent a forward surface (28) that is forward of the inlet (54) and the at least one sensor (42,40) is disposed on the forward surface (28).

5. The gas turbine engine assembly (16) as recited in claim 4, wherein the fan nacelle (26) is integrated into an aircraft structure (12) and the forward surface (28) is a portion of the aircraft structure (12).

6. The gas turbine engine assembly (16) as recited in claim 4 or 5, wherein the fan nacelle (26) includes a top surface spaced apart from the forward surface (28) in a direction transverse to the fan rotation axis (A) and a second sensor (50) is disposed on the top surface.

7. The gas turbine engine assembly (16) as recited in any of claims 2 to 6, wherein the at least one sensor (42,40) includes a plurality of sensors (42) spaced apart forward of the inlet (54).

8. The gas turbine engine assembly (16) of claim 7, wherein the plurality of sensors (42) are spaced axially apart from each other forward of the inlet (54).

9. The turbine engine assembly (16) as recited in any of claims 2 to 8, wherein the at least one sensor (42,40) comprises a pressure probe.

10. The turbine engine assembly (16) as recited in any of claims 2 to 9, wherein the effector (14) comprises a mechanism that changes an incident angle of each of the plurality of fan blades (20) based on a circumferential position.

11. The gas turbine engine as recited in claim 1, wherein the signal indicative of an airflow condition comprises a non-uniform airflow condition about the inlet (54), and/or a portion of the fan nacelle (26) is disposed adjacent a forward surface (28) that is forward of the inlet (54) and the at least one means (42,40) for generating a signal is disposed on the forward surface (28) forward of the inlet (54).

12. A method (60) of operating a gas turbine engine (10), the method comprising:
measuring a pressure forward of an inlet (54) of a fan nacelle (26) with at least one sensor (42,40);
determining an inlet distortion condition based on the measured pressure; and
actuating an effector (14) to change an engine operational parameter based on the determined inlet distortion condition.
**characterised in that**:
the gas turbine engine (10) is mounted within an aircraft fuselage (12);
the sensor (42,40) is disposed on a surface (28) forward of the fan inlet (54); and
actuating the effector (14) to change an engine operational parameter based on the determined inlet distortion condition comprises changing a pitch angle for each of a plurality of fan blades (20) rotating into a low airflow velocity region during rotation about a rotational axis (A) and changing the pitch angle for each of the plurality of fan blades (20) rotating into a higher airflow velocity region during rotation about the rotational axis (A).

13. The method (60) as recited in claim 12, wherein the fan nacelle (26) is integrated into an aircraft fuselage (12) and partially surrounds a plurality of fan blades (20) rotatable about a fan axis (A) and the surface (28) forward of the fan inlet (54) is a portion of the aircraft fuselage (12), optionally at least a portion of airflow into the fan inlet (54) is a boundary layer along the surface (28) of the aircraft fuselage (12) and the inlet distortion varies in a direction away from the surface (28).

14. The method (60) as recited in claim 12 or 13, including identifying a plurality of pressures that correspond with one of a plurality of inlet distortion conditions and determining the inlet distortion condition based on the pressure measured by the at least one sensor (42,40) forward of the inlet (54), optionally wherein the plurality of inlet distortion conditions comprise an airflow velocity profile that varies in a direction transverse to the fan axis (A).

15. The method (60) as recited in any of claims 12 to 14, wherein the at least one sensor (42,40) comprise a plurality of pressure sensors (42) spaced axially forward of the fan inlet (54) that measure a static pressure.

## Patentansprüche

1. Gasturbinentriebwerksbaugruppe (16), umfassend;
eine Vielzahl von Fan-Laufschaufeln (20), die um eine Fan-Rotationsachse (A) drehbar sind;
eine Fan-Gondel (26), die die Vielzahl von Fan-Laufschaufeln (20) mindestens teilweise umgibt, wobei die Fan-Gondel (26) einen Einlass (54) definiert;
mindestens eine Einrichtung (42, 40) zum Erzeugen eines Signals, das einen Zustand eines Luftstroms angibt, der in den Einlass (54) eintritt;
ein Stellglied (14), das so betätigt werden kann, dass es Verzerrungen im Einlassluftstrom ausgleicht; und
eine Steuerung (48), die das Signal empfängt, das einen Zustand eines Luftstroms angibt, der in den Einlass (54) eintritt, und einen Einlassverzerrungszustand ermittelt, der dem Signal, das den Zustand des Luftstroms angibt, entspricht, und das Stellglied (14) basierend auf dem Einlassverzerrungszustand betätigt, **dadurch gekennzeichnet, dass**:
das Stellglied (14) einen Einstellwinkelsteuermechanismus umfasst, der einen Einstellwinkel jeder der Fan-Laufschaufeln (20) verändert, um den ermittelten Einlassverzerrungszustand auszugleichen.

2. Gasturbinentriebwerk nach Anspruch 1, wobei die mindestens eine Einrichtung (42, 40) zum Erzeugen eines Signals, das einen Zustand eines Luftstroms angibt, der in den Einlass (54) eintritt, mindestens ein Sensor (42, 40) ist, der vor der Fan-Gondel (26) angeordnet ist.

3. Gasturbinentriebwerksbaugruppe (16) nach Anspruch 2, wobei der Zustand des Luftstroms einen ungleichmäßigen Zustand des Luftstroms umfasst.

4. Gasturbinentriebwerksbaugruppe (16) nach Anspruch 2 oder 3, wobei ein Abschnitt der Fan-Gondel (26) angrenzend an eine vordere Fläche (28), die vor dem Einlass (54) liegt, angeordnet ist und der mindestens eine Sensor (42, 40) an der vorderen Fläche (28) angeordnet ist.

5. Gasturbinentriebwerksbaugruppe (16) nach Anspruch 4, wobei die Fan-Gondel (26) in eine Luftfahrzeugstruktur (12) integriert ist und die vordere Fläche (28) ein Abschnitt der Luftfahrzeugstruktur (12) ist.

6. Gasturbinentriebwerksbaugruppe (16) nach Anspruch 4 oder 5, wobei die Fan-Gondel (26) eine obere Fläche beinhaltet, die von der vorderen Fläche (28) in einer Richtung quer zur Fan-Rotationsachse (A) beabstandet ist, und ein zweiter Sensor (50) an der oberen Fläche angeordnet ist.

7. Gasturbinentriebwerksbaugruppe (16) nach einem der Ansprüche 2 bis 6, wobei der mindestens eine Sensor (42,40) eine Vielzahl von Sensoren (42) beinhaltet, die vor dem Einlass (54) beabstandet sind.

8. Gasturbinentriebwerksbaugruppe (16) nach Anspruch 7, wobei die Vielzahl von Sensoren (42) axial voneinander vor dem Einlass (54) beabstandet sind.

9. Turbinentriebwerksbaugruppe (16) nach einem der Ansprüche 2 bis 8, wobei der mindestens eine Sensor (42,40) eine Drucksonde umfasst.

10. Turbinentriebwerksbaugruppe (16) nach einem der Ansprüche 2 bis 9, wobei das Stellglied (14) einen Mechanismus umfasst, der einen Anstellwinkel jeder aus der Vielzahl von Fan-Laufschaufeln (20) basierend auf einer Umfangsposition ändert.

11. Gasturbinentriebwerk nach Anspruch 1, wobei das Signal, das einen Zustand eines Luftstroms angibt, einen ungleichmäßigen Zustand des Luftstroms um den Einlass (54) umfasst, und/oder ein Abschnitt der Fan-Gondel (26) angrenzend an eine vordere Fläche (28) angeordnet ist, die vor dem Einlass (54) liegt, und die mindestens eine Einrichtung (42,40) zum Erzeugen eines Signals an der vorderen Fläche (28) vor dem Einlass (54) angeordnet ist.

12. Verfahren (60) zum Betreiben eines Gasturbinentriebwerks (10), wobei das Verfahren Folgendes umfasst:
Messen eines Drucks vor einem Einlass (54) einer Fan-Gondel (26) mit mindestens einem Sensor (42, 40);
Ermitteln eines Einlassverzerrungszustands basierend auf dem gemessenen Druck; und
Betätigen eines Stellglieds (14), um einen Triebwerksbetriebsparameter basierend auf dem ermittelten Einlassverzerrungszustand zu ändern.
**dadurch gekennzeichnet, dass**:
das Gasturbinentriebwerk (10) innerhalb eines Luftfahrzeugrumpfs (12) montiert ist;
der Sensor (42, 40) an einer Fläche (28) vor dem Fan-Einlass (54) angeordnet ist; und
das Betätigen des Stellglieds (14), um einen Triebwerksbetriebsparameter basierend auf dem ermittelten Einlassverzerrungszustand zu ändern, das Ändern eines Einstellwinkels für jede aus einer Vielzahl von Fan-Laufschaufeln (20), die sich in einen Bereich niedriger Luftstromgeschwindigkeit während der Drehung um eine Rotationsachse (A) dreht, und das Ändern des Einstellwinkels für jede aus der Vielzahl von Fan-Laufschaufeln (20), die sich in einen Bereich höherer Luftstromgeschwindigkeit während der Drehung um die Rotationsachse (A) dreht, umfasst.

13. Verfahren (60) nach Anspruch 12, wobei die Fan-Gondel (26) in einen Luftfahrzeugrumpf (12) integriert ist und eine Vielzahl von Fan-Laufschaufeln (20), die um eine Fan-Achse (A) drehbar sind, teilweise umgibt, und die Fläche (28) vor dem Fan-Einlass (54) ein Abschnitt des Luftfahrzeugrumpfes (12) ist, wobei optional mindestens ein Teil des Luftstroms in den Fan-Einlass (54) eine Grenzschicht entlang der Fläche (28) des Luftfahrzeugrumpfes (12) ist und die Einlassverzerrung in einer Richtung von der Fläche weg (28) variiert.

14. Verfahren (60) nach Anspruch 12 oder 13, das Identifizieren einer Vielzahl von Drücken, die einem aus einer Vielzahl von Einlassverzerrungszuständen entsprechen, und das Ermitteln des Einlassverzerrungszustands basierend auf dem Druck, der von dem mindestens einen Sensor (42, 40) vor dem Einlass (54) gemessen wird, umfassend, wobei optional die Vielzahl von Einlassverzerrungszuständen ein Luftstromgeschwindigkeitsprofil umfassen, das in einer Richtung quer zur Fan-Achse (A) variiert.

15. Verfahren (60) nach einem der Ansprüche 12 bis 14, wobei der mindestens eine Sensor (42, 40) eine Vielzahl von Drucksensoren (42) umfasst, die axial vor dem Fan-Einlass (54) beabstandet sind und die einen statischen Druck messen.

## Revendications

1. Ensemble moteur à turbine à gaz (16) comprenant ;
une pluralité de pales de soufflante (20) pouvant tourner autour d'un axe de rotation de soufflante (A) ;
une nacelle de soufflante (26) entourant au moins partiellement la pluralité de pales de soufflante (20), la nacelle de soufflante (26) définissant une entrée (54) ;
au moins un moyen (42, 40) pour générer un signal indiquant une condition d'écoulement d'air dans l'entrée (54) ;
un effecteur (14) qui peut être actionné pour s'adapter aux distorsions de l'écoulement d'air d'entrée ; et
un dispositif de commande (48) recevant le signal indiquant une condition d'écoulement d'air entrant dans l'entrée (54) et déterminant une condition de distorsion d'entrée correspondant au signal indiquant une condition d'écoulement d'air et actionnant l'effecteur (14) sur la base de la condition de distorsion d'entrée identifiée, **caractérisé en ce que** :
l'effecteur (14) comprend un mécanisme de commande de pas qui modifie un pas de chacune des pales de soufflante (20) pour s'adapter à la condition de distorsion d'entrée déterminée.

2. Moteur à turbine à gaz selon la revendication 1, dans lequel l'au moins un moyen (42, 40) de génération d'un signal indiquant une condition d'écoulement d'air entrant dans l'entrée (54) est au moins un capteur (42, 40) positionné en avant de la nacelle de soufflante (26).

3. Ensemble moteur à turbine à gaz (16) selon la revendication 2, dans lequel la condition d'écoulement d'air comprend une condition d'écoulement d'air non uniforme.

4. Ensemble moteur à turbine à gaz (16) selon la revendication 2 ou 3, dans lequel une partie de la nacelle de soufflante (26) est disposée adjacente à une surface avant (28) qui est en avant de l'entrée (54) et l'au moins un capteur (42, 40) est disposé sur la surface avant (28).

5. Ensemble moteur à turbine à gaz (16) selon la revendication 4, dans lequel la nacelle de soufflante (26) est intégrée dans une structure d'aéronef (12) et la surface avant (28) est une partie de la structure d'aéronef (12).

6. Ensemble moteur à turbine à gaz (16) selon la revendication 4 ou 5, dans lequel la nacelle de soufflante (26) comporte une surface supérieure espacée de la surface avant (28) dans une direction transversale à l'axe de rotation de soufflante (A) et un second capteur (50) est disposé sur la surface supérieure.

7. Ensemble moteur à turbine à gaz (16) selon l'une quelconque des revendications 2 à 6, dans lequel l'au moins un capteur (42, 40) comporte une pluralité de capteurs (42) espacés en avant de l'entrée (54).

8. Ensemble moteur à turbine à gaz (16) selon la revendication 7, dans lequel la pluralité de capteurs (42) sont espacés axialement les uns des autres en avant de l'entrée (54).

9. Ensemble moteur à turbine (16) selon l'une quelconque des revendications 2 à 8, dans lequel l'au moins un capteur (42, 40) comprend une sonde de pression.

10. Ensemble moteur à turbine (16) selon l'une quelconque des revendications 2 à 9, dans lequel l'effecteur (14) comprend un mécanisme qui modifie un angle d'incidence de chacune de la pluralité de pales de soufflante (20) sur la base d'une position circonférentielle.

11. Moteur à turbine à gaz selon la revendication 1, dans lequel le signal indiquant une condition d'écoulement d'air comprend une condition d'écoulement d'air non uniforme autour de l'entrée (54), et/ou une partie de la nacelle de soufflante (26) est disposée adjacente à une surface avant (28) qui est en avant de l'entrée (54) et l'au moins un moyen (42, 40) pour générer un signal est disposé sur la surface avant (28) en avant de l'entrée (54).

12. Procédé (60) de fonctionnement d'un moteur à turbine à gaz (10), le procédé comprenant :
la mesure d'une pression en avant d'une entrée (54) d'une nacelle de soufflante (26) avec au moins un capteur (42, 40) ;
la détermination d'une condition de distorsion d'entrée sur la base de la pression mesurée ; et
l'actionnement d'un effecteur (14) pour modifier un paramètre de fonctionnement de moteur sur la base de la condition de distorsion d'entrée déterminée.
**caractérisé en ce que** :
le moteur à turbine à gaz (10) est monté à l'intérieur d'un fuselage d'aéronef (12) ;
le capteur (42, 40) est disposé sur une surface (28) en avant de l'entrée de soufflante (54) ; et
l'actionnement de l'effecteur (14) pour modifier un paramètre de fonctionnement de moteur sur la base de la condition de distorsion d'entrée déterminée comprend la modification d'un angle de pas pour chacune d'une pluralité de pales de soufflante (20) tournant dans une région à faible vitesse d'écoulement d'air pendant la rotation autour d'un axe de rotation (A) et la modification de l'angle de pas pour chacune de la pluralité de pales de soufflante (20) tournant dans une région à vitesse d'écoulement d'air plus élevée pendant la rotation autour de l'axe de rotation (A).

13. Procédé (60) selon la revendication 12, dans lequel la nacelle de soufflante (26) est intégrée dans un fuselage d'aéronef (12) et entoure partiellement une pluralité de pales de soufflante (20) pouvant tourner autour d'un axe de soufflante (A) et la surface (28) en avant de l'entrée de soufflante (54) est une partie du fuselage d'aéronef (12), éventuellement au moins une partie de l'écoulement d'air dans l'entrée de soufflante (54) est une couche limite le long de la surface (28) du fuselage d'aéronef (12) et la distorsion d'entrée varie dans une direction éloignée de la surface (28).

14. Procédé (60) selon la revendication 12 ou 13, comportant l'identification d'une pluralité de pressions qui correspondent à l'une d'une pluralité de conditions de distorsion d'entrée et la détermination de la condition de distorsion d'entrée sur la base de la pression mesurée par l'au moins un capteur (42, 40) en avant de l'entrée (54), éventuellement dans lequel la pluralité de conditions de distorsion d'entrée comprennent un profil de vitesse d'écoulement d'air qui varie dans une direction transversale à l'axe de soufflante (A).

15. Procédé (60) selon l'une quelconque des revendications 12 à 14, dans lequel l'au moins un capteur (42, 40) comprend une pluralité de capteurs de pression (42) espacés axialement en avant de l'entrée de soufflante (54) qui mesurent une pression statique.
